# FASCICULE DE BREVET EUROPEEN

(11) **EP 2 070 675 B1**
(45) Date de publication et mention de la délivrance du brevet: **15.08.2012**
(21) Numéro de dépôt: 07305001.5
(22) Date de dépôt: 14.12.2007
(51) Int. Cl.: B29C 33/20, B29C 45/64, B22D 17/26

(54) **Moule équipé d'un dispositif de verrouillage**
Gussform mit einer Verschlussvorrichtung
Mould equipped with a locking device

(43) Date de publication de la demande: 17.06.2009
(73) Titulaire: Compose, 01100 Bellignat (FR)
(72) Inventeur: Godde, Sébastien, 01110 Hauteville Lompnes (FR)
(74) Mandataire: Cabinet Plasseraud

(56) Documents cités:
- FR-A- 1 564 985
- JP-A- 6 262 671
- JP-A- 8 001 741
- JP-A- 10 180 778

## Description

### DOMAINE DE L'INVENTION

L'invention appartient au domaine des outils de fabrication de pièces moulées, notamment par injection. En particulier, l'invention vise un dispositif de verrouillage d'un moule.

### CONTEXTE TECHNIQUE

Il existe plusieurs techniques de moulage de pièces, notamment en matériaux plastiques, en matériaux composites ou en métal.

Le moulage par injection est connu de longue date. On rapproche deux demi-moules l'un de l'autre qui entrent en contact le long d'un plan de joint. Puis la matière à mouler est rapidement injectée dans le moule. Etant donné que les demi-moules sont jointifs, il est possible de prévoir à l'intérieur de l'empreinte des zones autour desquelles la matière injectée pourra se répartir. Une fois que le moule est plein, l'injection est poursuivie afin d'assurer un remplissage correct du moule et de tenir compte du retrait de la matière au cours du refroidissement. Cependant, ce remplissage complémentaire nécessite d'exercer une importante contre-pression sur les demi-moules, pour éviter que les deux demi-moules ne s'écartent sous l'effet de la pression d'injection. L'écartement des demi-moules conduirait « au mieux », à l'apparition de bavures le long du plan de joint, ce qui est tout à fait intolérable.

Pour éviter ce problème, il est connu d'exercer une contre-pression sur l'un des demi-moules à l'aide d'une presse. Plus la pièce est fine et a une surface projetée importante, plus la presse doit exercer une force de verrouillage élevée. De plus, il est souvent préférable que le dimensionnement de la presse autorise l'application d'une contre-pression supérieure à la valeur strictement nécessaire en théorie.

En réalité, le fabricant de pièces moulées -le transformateur- dispose généralement d'un parc de presses dans une gamme de force de verrouillage donnée. En fonction de la contre-pression nécessaire pour fabriquer la pièce, il choisit l'une des presses de son parc et y installe le moule. Jusqu'à présent, les presses employées étaient généralement suffisamment puissantes.

Pour remédier à ce problème de pression, la technique de moulage par injection-compression a été développée. Il s'agit dans ce cas de placer une certaine quantité de matière à mouler dans un premier demi-moule tout en rapprochant un second demi-moule du premier. Sous l'effet de la pression, la galette de matière est répartie à l'intérieure du moule, entre les deux demi-moules et elle épouse l'empreinte ainsi définie.

Cependant cette technique interdit de prévoir des ouvertures au niveau du plan de joint des deux demi-moules. Pour obtenir une pièce comportant des ouvertures, il est nécessaire de prévoir des étapes de découpes dans la pièce moulée, afin de ménager les ouvertures voulues.

Ainsi, la qualité de finition n'est pas toujours satisfaisante, tant du point de vue de l'aspect de surface des pièces moulées, que du point de vue de découpes à réaliser. EP-A-0420098 décrit un moule selon le préambule de la revendication 1.

### BREVE DESCRIPTION DE L'INVENTION

Un objectif de l'invention est de proposer un moule qui permette de mouler des pièces en utilisant une presse dont la force de verrouillage est bien inférieure à celle qui est nécessaire lorsqu'on utilise un moule non équipé d'un dispositif de verrouillage conforme à l'invention. Un tel dispositif de verrouillage devrait donc permettre de réaliser des pièces moulées dont la structure tridimensionnelle est complexe, qui rendent nécessaire d'exercer une contre-pression élevée sur le moule, en utilisant une presse dont la force de verrouillage serait normalement insuffisante si l'on n'utilisait pas un tel dispositif de verrouillage.

A cet effet, l'invention consiste en un moule selon la revendication 1.

Les dispositifs de verrouillage mis en oeuvre viennent en supplément des moyens mis en oeuvre pour effectuer l'ouverture et la fermeture du moule.

Ainsi, en plus de la force de verrouillage normalement exercée par les moyens d'ouverture et de fermeture pour empêcher l'ouverture du moule au cours de l'injection de matière, une force de verrouillage supplémentaire est exercée par le dispositif de verrouillage conforme à l'invention. Il devient alors possible de mouler des pièces qui nécessitent d'exercer une force de verrouillage supérieure à la force de verrouillage nominale des moyens d'ouverture et de fermeture considérés, la différence étant exercée par les dispositifs de verrouillage qui équipent le moule.

Avantageusement le verrou du moule a une forme complémentaire à celle des évidements dans lesquels il doit être logé.

Dans une variante de l'invention, un premier demi-moule est destiné à être associé à un plateau fixe et un second demi-moule est destiné à être associé à une plateau mobile. L'un et/ou l'autre des plateaux et/ou des demi-moules sont équipés de moyens d'injection de matière à mouler et de moyens pour éjecter une pièce moulée.

Les dispositifs de verrouillage mis en oeuvre viennent en supplément de la presse généralement accouplée au demi-moule associé au plateau mobile. Ainsi, en plus de la force de verrouillage normalement exercée par la presse pour empêcher l'ouverture du moule au cours de l'injection de matière, une force de verrouillage supplémentaire est exercée par le dispositif de verrouillage conforme à l'invention.

Dans une autre variante de l'invention, chaque évidement d'un demi-moule est positionné symétriquement d'un évidement de l'autre demi-moule par rapport au plan de joint.

La description qui va suivre exposera en détails les caractéristiques et avantages de l'invention, en relation avec les figures. La description détaillée, tout en indiquant des variantes préférées de l'invention, est uniquement fournie pour illustrer l'invention.

### BREVE DESCRIPTION DES FIGURES

L'invention va maintenant être décrite en détail, à l'aide d'exemples qui feront référence aux figures annexées, parmi lesquelles :
La figure 1 représente une vue en perspective d'une variante d'un moule selon l'invention, en position fermée. La figure 2 représente une vue en perspective de la variante de moule de la figure 1, dans laquelle le demi-moule destiné à être associé à un plateau fixe n'apparaît pas.
Les figures 3a et 3b représentent une vue en perspective d'une variante de dispositif de verrouillage selon l'invention, respectivement vue face arrière (figure 3a) et face côté moule (figure 3b).
Les figures 4a, 4b et 4c représentent des vues en coupes de la variante des figures 1 et 2, illustrant le fonctionnement d'un moule équipé d'un dispositif de verrouillage selon l'invention, respectivement vu ouvert (figure 4a), en cours de verrouillage (figure 4b) et verrouillé (figure 4c).
La figure 5 représente une vue en élévation latérale d'une variante d'un dispositif de verrouillage. La figure 6 représente une vue en élévation de dessus de la variante de dispositif de verrouillage de la figure 5.
La figure 7 représente un détail de la figure 4c délimité par l'encadré VII.

### DESCRIPTION DETAILLEE DE L'INVENTION

Il convient de noter que les articles définis ou indéfinis singuliers, dans la description et les revendications, doivent également être compris comme des articles pluriels, à moins que le contexte ne dicte clairement une interprétation contraire. Sauf mention contraire, il convient d'attribuer aux termes techniques et scientifiques employés leur signification communément admise par l'homme du métier.

Dans la suite de la description, le terme « demi-moule mobile » fera référence au demi-moule destiné à être associé aux moyens mis en oeuvre pour effectuer l'ouverture et la fermeture du moule. Par exemple, dans le cas du moulage par injection, il peut s'agir d'un plateau mobile accouplé à une presse hydraulique. Dans certaines variantes de réalisation, les moyens pour effectuer l'ouverture et la fermeture du moule peuvent comprendre un système à palans. De même, le terme « demi-moule fixe » fera référence à l'autre demi-moule, qui est généralement fixe. Cela dit, certaines installations comprennent un demi-moule mobile et deux demi-moules « fixes » disposés sur une table roulante. Cela permet de pour réaliser certaines certains opérations en temps masqué sur l'un des demi-moules « fixes » tout en fabriquant une pièce moulée avec le demi-moule mobile et l'autre demi-moule « fixe ». Le demi-moule fixe peut-être posé au sol, sur un support. Il peut également être destiné à être associé à un plateau fixe, auquel sont rapportés certains équipements de la chaîne de moulage.

Dans la suite de la description, l'expression « face inclinée de l'évidement » fera référence à la face latérale de l'évidement qui est la plus proche du plan de joint et qui présente un angle, noté A, avec le plan de joint. L'expression « face latérale opposée » fera référence à la face latérale de l'évidement opposée à la face inclinée de l'évidement.

Par ailleurs, pour simplifier la description, on fera référence à une variante de l'invention dans une chaîne de moulage par injection. Dans cette variante, le demi-moule fixe et le demi-moule mobile sont associés respectivement à un plateau fixe et à un plateau mobile. Le plateau fixe et le demi-moule fixe sont équipés de moyens d'injection de matière à mouler. Le plateau mobile et le demi-moule mobile sont équipés de moyens pour éjecter une pièce moulée. Etant donné que l'invention ne porte pas spécifiquement sur ces équipements d'un moule, mais sur un dispositif de verrouillage, l'invention ne saurait être limitée à cette variante. En particulier, l'homme du métier connaît divers modes de réalisation, d'une part, pour l'apport de matière dans le moule, notamment par dépôt, par injection ou encore par injection compression, et d'autre part, pour l'éjection de la pièce moulée. Par exemple, l'homme du métier sait réaliser des moules, notamment pour moulage par injection ou par injection-compression, dans lesquels l'injection de matière est réalisée au niveau du demi-moule mobile voire même, pour la réalisation de pièces bi-matière, à la fois au niveau du demi-moule fixe et du demi-moule mobile. Par ailleurs, les moyens pour éjecter la pièce moulée peuvent équiper l'un ou l'autre des deux demi-moules voire même les deux. D'autres détails de fabrication des moules, notamment pour moulage par injection, sont connus de l'homme du métier, par exemple pour la réalisation de structures tridimensionnelles complexes ou d'ouvertures. La description ne comportera pas non plus de détails sur les circuits hydrauliques nécessaires pour assurer l'ouverture ou la fermeture du moule ou pour éjecter une pièce moulée. Il s'agit là de détails de fabrications bien connus de l'homme du métier.

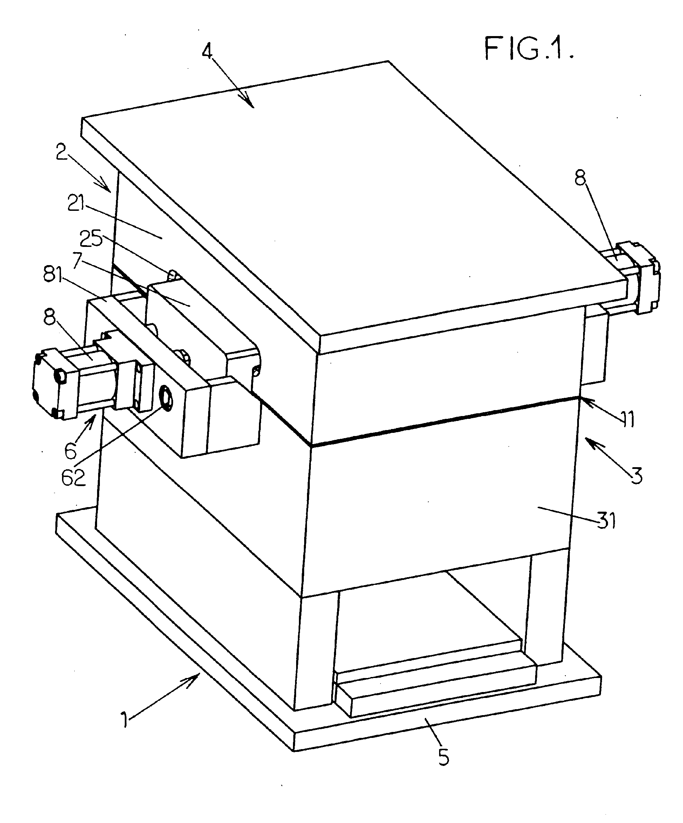

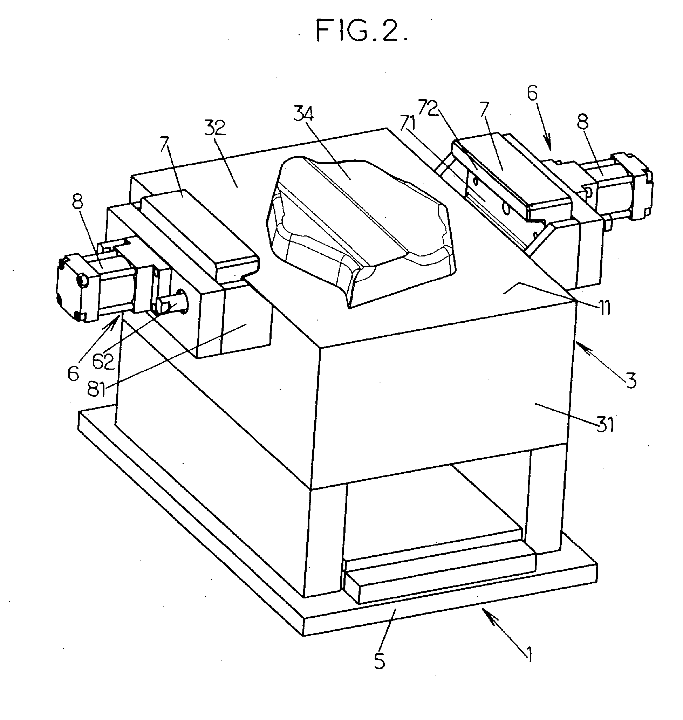

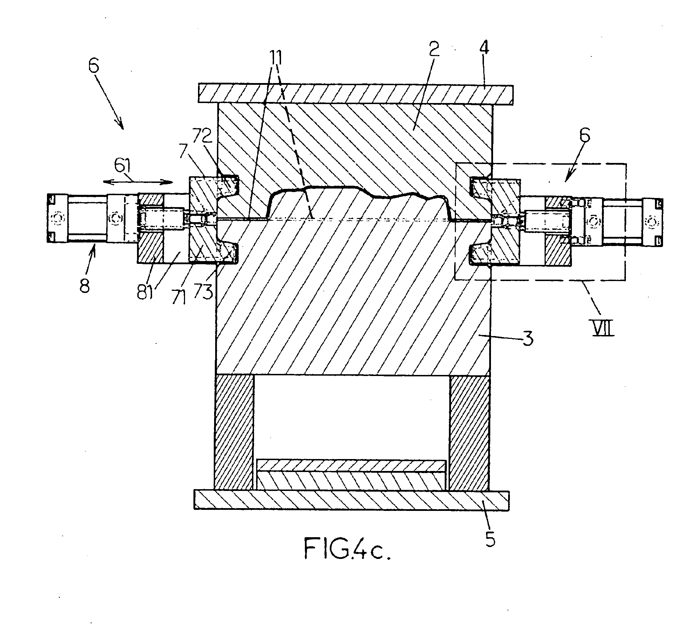

Les figures 1 et 2 représentent des vues en perspectives d'une variante d'un moule 1 comprenant un demi-moule fixe 2 et un demi-moule mobile 3 respectivement associés à un plateau fixe 4 et un plateau mobile 5. Le demi-moule fixe 2 est défini par une surface latérale 21, une face avant 22 et une face arrière 23. Le demi-moule mobile 3 est défini par une surface latérale 31, une face avant 32 et une face arrière 33. La face avant 22, 32 des demi-moules 2, 3 porte une empreinte 24, 34 complémentaires l'une de l'autre. Lorsque le moule est fermé, comme cela est illustré aux figures 1 et 4c, les deux demi-moules sont en contact au niveau d'un plan de joint 11 qui est sensiblement perpendiculaire à la direction d'ouverture et de fermeture du moule 1. Un volume d'empreinte est défini entre les empreintes 24, 34. Ce volume sera rempli de matière à mouler, afin de fabriquer la pièce voulue.

Par exemple, le plateau fixe 4 et le demi-moule fixe 2 sont équipés de moyens d'injection de matière à mouler. Il peut s'agir d'une buse qui débouche sur la face avant 22 du demi-moule fixe 2, au niveau de l'empreinte 24. Au contraire, ce peuvent être le demi-moule mobile 3 et le plateau mobile 5 qui sont équipés de moyens d'injection de matière à mouler, dans une disposition comparable à celle précédemment décrite. Enfin, dans certaines installations, particulièrement quand on souhaite fabriquer des pièces moulées bi-matière, plusieurs injections de matière peuvent être nécessaires.

Généralement, en amont des moyens d'injection, l'installation de fabrication de pièces moulées comporte une vis doseuse qui permet d'amener la matière à mouler sous forme pâteuse, en une quantité prédéterminée en fonction du volume d'empreinte et du retrait de la matière au refroidissement.

Le plateau mobile 5 est équipé de moyens pour l'ouverture et la fermeture du moule 1, qui peuvent être accouplés à une presse. La presse a pour fonction de maintenir le moule 1 fermé au cours de l'injection de matière à mouler. En effet, pour assurer un bon remplissage du volume d'empreinte, la pression d'injection peut être particulièrement élevée et il est essentiel d'appliquer une force de verrouillage qui permette de contrer la pression d'injection, pour éviter toute malfaçon des pièces moulées.

Après l'injection de la matière à mouler, il convient de laisser la pièce refroidir. A cet effet, le moule est équipé d'un système de refroidissement, non illustré, qui constitue un détail de fabrication connu de l'homme du métier. Puis, une fois que la pièce est suffisamment rigide, on ouvre le moule 1 et on éjecte la pièce moulée. Généralement, on détermine le moment d'ouverture du moule 1 en fonction de la vitesse de refroidissement de la pièce et de la température de démoulage. Dans le cas de l'injection de matière plastique, la température de démoulage est choisie inférieure à la température de transition vitreuse de la matière utilisée. Dans le cas de l'injection de métal, ou d'alliage de métaux, la température de démoulage est choisie inférieure à la température de solidification du métal, ou de l'alliage, utilisé. En dessous de la température de démoulage, la pièce est suffisamment rigide. Pour effectuer l'éjection, le demi-moule fixe 2, le demi-moule mobile 3, ou les deux demi-moules, sont équipés de moyens d'éjection qui constituent également des détails de fabrication connus de l'homme du métier.

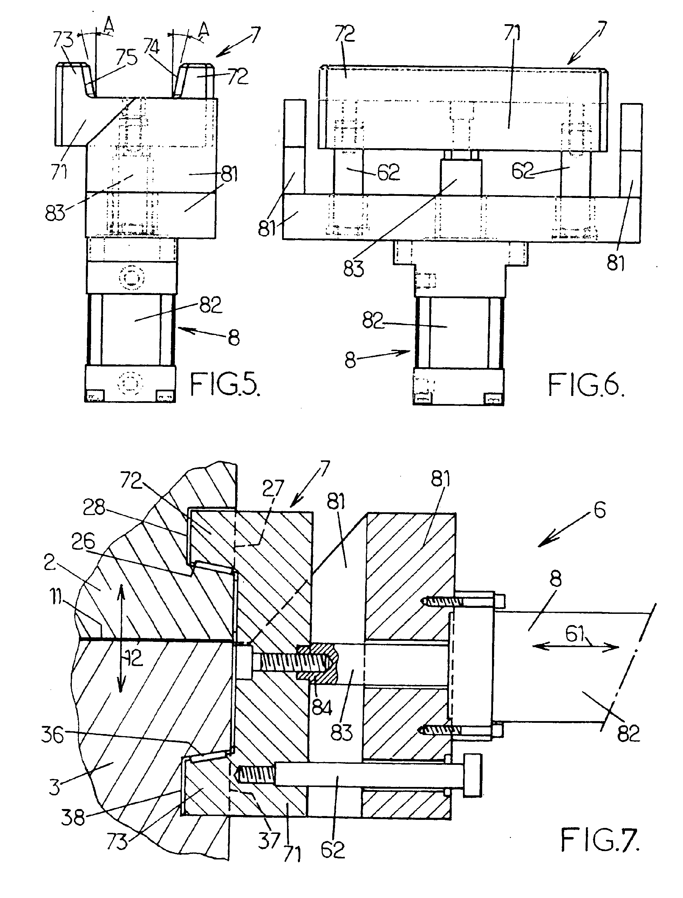

Pour suppléer la force de verrouillage, le moule 1 est équipé d'au moins un dispositif de verrouillage 6 qui comprend un verrou 7 et un système autonome apte à rapprocher et à écarter le verrou 7 des évidements 25, 35 dans lesquels le verrou 7 doit être logé. Dans les variantes représentées aux figures 1 à 4c et à la figure 7, ledit système autonome est un vérin hydraulique 8. Selon une variante non illustrée, le vérin hydraulique est un vérin autobloquant. Dans d'autres variantes de réalisation, on peut envisager la mise en oeuvre d'un vérin pneumatique. Un vérin pneumatique est généralement moins puissant qu'un vérin hydraulique, de sorte que l'on réservera cette possibilité aux installations dans lesquelles la force de verrouillage requise est faible.

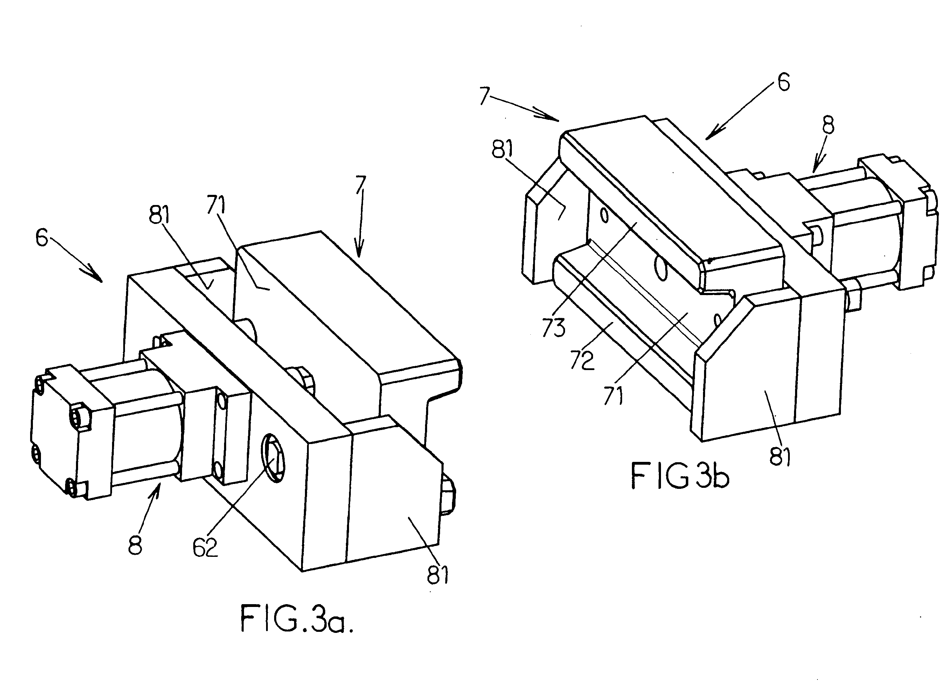

Un dispositif de verrouillage est représenté en perspective aux figures 3a et 3b. Dans cette variante, le verrou 7 comporte un corps 71 allongé et deux tenons 72, 73 longitudinaux, de sorte que le verrou 7 a globalement un profil en C. Les tenons 72, 73 sont destinés à loger dans les évidement 25, 35 de chacun des demi-moules 2, 3.

Dans les variantes illustrées aux différentes figures, les évidements 25, 35 sont positionnés symétriquement deux à deux, de part et d'autre du plan de joint 11.

Cela dit, d'autre variantes sont envisageables. Par exemple, un premier demi-moule peut être muni de deux évidements voisins, le second demi-moule d'un seul évidement à une position située sensiblement à l'aplomb et entre les deux évidements du premier demi-moule. Dans cette variante, le verrou comporte un corps et trois dents destinées à loger dans les trois évidements décrits. Un tel verrou est donc comparable à une griffe à trois branches.

Le vérin hydraulique 8 comporte, classiquement, une chambre 82, un piston et une tige 83. Une extrémité de la tige 83 est solidaire du piston, lequel se déplace en translation dans la chambre 82 selon une direction 61 de verrouillage et d'ouverture du dispositif de verrouillage 6, sous l'effet de l'arrivée ou de la sortie de liquide dans la chambre 82. Dans les variantes illustrées aux différentes figures, l'autre extrémité 84 de la tige 83 du vérin 8 est fixée au verrou 7. Par ailleurs, la chambre 8 est fixée à un support 81 attelé à un seul des demi-moules 2, 3. Ainsi, lorsque le verrou 7 est logé dans les évidements 25, 35 des demi-moules 2, 3, en d'autres termes lorsque le dispositif de verrouillage 6 est verrouillé, la tige 83 du vérin 8 est en position sortie de la chambre 82 du vérin 8. Au contraire, lorsque le dispositif de verrouillage 6 est ouvert, la tige 83 du vérin 8 se trouve en position rentrée dans la chambre 82 du vérin 8.

Selon une variante de l'invention, le dispositif de verrouillage 6 comporte en outre des moyens de guidage du verrou 7. Il s'agit par exemple de barres de guidage 62, connues de l'homme du métier.

Dans une variante de l'invention, un demi-moule porte au moins deux dispositifs de verrouillage 6. Il est préférable que ces dispositifs soient répartis de façon équilibrée autour des demi-moules, par exemple autour de la surface latérale 21, 31 des demi-moules. Par exemple, si le moule 1 comporte deux dispositifs de verrouillage 6, ceux-ci sont disposés de façon sensiblement symétrique l'un de l'autre par rapport à la direction 12 d'ouverture et de fermeture du moule 1. Une symétrie parfaite n'est pas absolument nécessaire. Par contre, il est préférable que la force de verrouillage des dispositifs de verrouillage 6 soit sensiblement équilibrée autour du moule 1.

De façon générale, il est envisagé que les dispositifs de verrouillage 6 soient installés par paires, mais cela n'est pas toujours possible, en fonction de l'encombrement autour du moule dans l'installation de fabrication de pièces moulées.

Par ailleurs, il est possible, d'associer plusieurs vérins 8 en parallèle à un seul verrou 7.

Considérons les évidements 25, 35. Un évidement sensiblement parallélépipédique présente une ouverture 27, 37 et un fond 28, 38, ainsi que des faces d'extrémité sensiblement orthogonales au plan de joint 11. Les évidements 25, 35 ont deux faces latérales opposées, situées entre leur ouverture 27, 37 et leur fond 28, 38. L'une de ces faces latérales est plus proche du plan de joint 11 que l'autre. Pour éviter le blocage du verrou 7 dans les évidements 25, 35, on peut prévoir que ces faces latérales 26, 36 proches du plan de joint 11 soient inclinées par rapport au plan de joint 11 et forment un angle A avec le plan de joint 11, de sorte que la distance entre lesdites faces latérales opposées augmente du fond vers l'ouverture de l'évidement. L'angle *A* est compris entre 2° et 20° inclus, voire entre 3° et 10° inclus. L'angle minimal dépend notamment des qualités de glissement du verrou sur la face latérale la plus proche du plan de joint.

Cela dit, plus l'angle A est important, moins la résultante de la force de verrouillage du dispositif de verrouillage 6, selon la direction 12 d'ouverture et de fermeture du moule, sera importante. En conséquence, il est préférable de choisir un angle *A* le plus petit possible. Il faut donc concilier un objectif qui est d'éviter le blocage du verrou 7 dans les évidements 25, 35, et un objectif qui est de transmettre une force de verrouillage résultante la plus élevée possible.

De façon générale, il est préférable que le verrou 7 ait une forme complémentaire de celle des évidements 25, 35 dans lesquels il doit être logé. Dans le cas décrit ci-dessus, les tenons 72, 73 présentent chacun une face interne 74, 75 destinée à se trouver en vis-à-vis des faces inclinées 26, 36 de l'évidement 25, 35. Les faces internes 74, 75 sont également inclinées selon un angle *A* par rapport au plan de joint 11.

Pour améliorer les propriétés de glissement des faces inclinées 26, 36 des évidements 25, 35, ainsi que celles des faces internes 74, 75 des tenons 72, 73, il est possible qu'elles comprennent des plaquettes d'appui en un matériau dont les propriétés de glissement sont meilleures que celles du matériau des demi-moules 2, 3 ou du verrou 7. De plus, les plaquettes d'appui peuvent constituer des pièces d'usure, ce qui évite d'abîmer le plan de joint 11.

Les figures représentent un dispositif de verrouillage dans lesquelles le verrou est une pièce mécanique, généralement d'un bloc, qui vient se loger dans des évidements prévus dans la surface latérale des demi-moules.

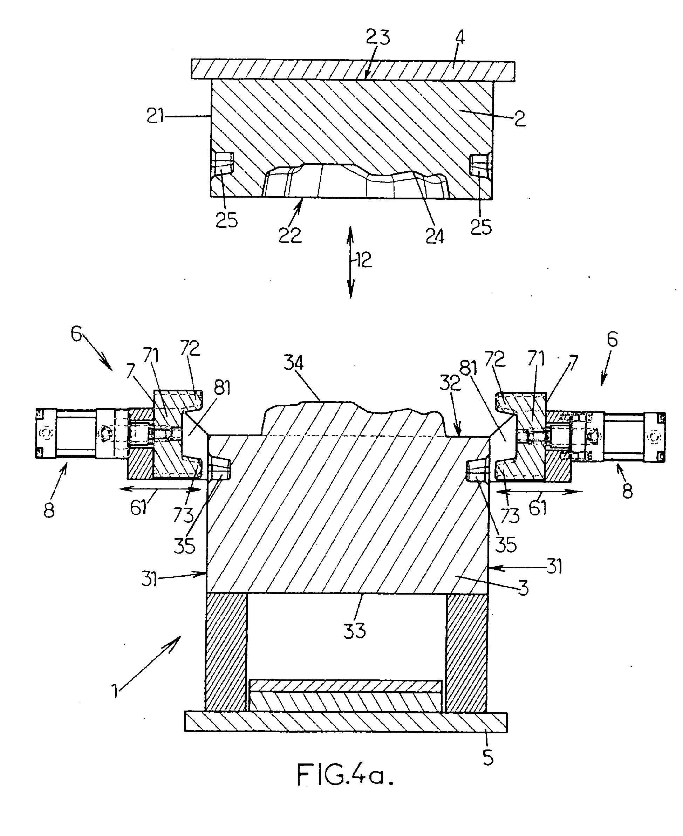

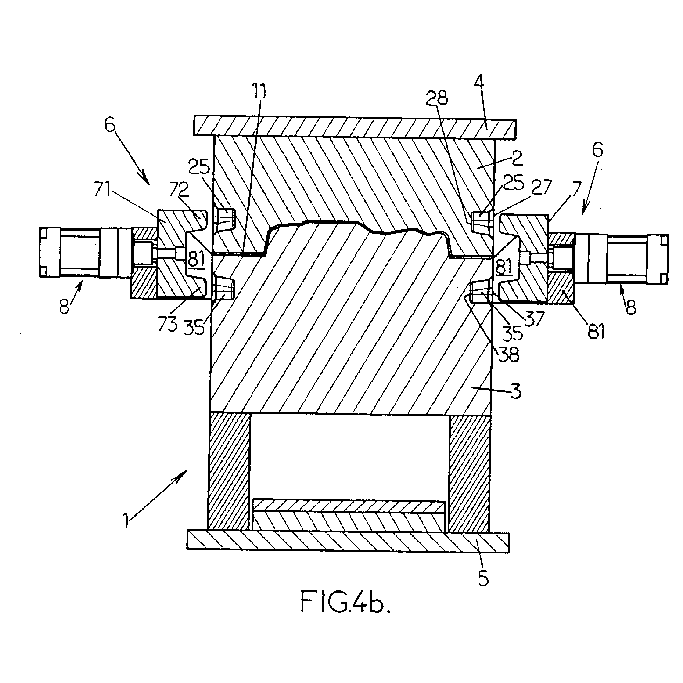

Le fonctionnement du moule 1 équipé de dispositifs de verrouillage 6 va maintenant être décrit, en référence aux figures 4a, 4b et 4c, en référence à une chaîne de moulage par injection.

Tout d'abord, le moule 1 est ouvert, comme illustré à la figure 4a. Cela signifie, d'une part, que les demi-moules 2, 3 sont écartés l'un de l'autre, et d'autre part, que les dispositifs de verrouillage 6 sont en position ouverte.

Puis, grâce à des moyens d'ouverture et de fermeture du moule, le demi-moule mobile 3 et le plateau mobile 5 se rapprochent du demi-moule fixe 2 et du plateau fixe 4 selon la direction 12 d'ouverture et de fermeture du moule, jusqu'à ce que les demi-moules soient jointifs au niveau du plan de joint 11. On arrive alors à la position représentée à la figure 4b.

L'injection de matière à mouler peut alors débuter. Avant le début de l'injection, ou simultanément, les dispositifs de verrouillage 6 sont actionnés, afin de déplacer les verrous 7 vers les évidements 25, 35 dans lesquels ils doivent être logés, selon la direction de verrouillage 61. En d'autres termes, soit les opérations de verrouillage et d'injection de matière sont réalisées en série, l'une après l'autres, soit elles sont réalisées en parallèle. Dans ce dernier cas, il est possible de raccourcir la durée du cycle de fabrication des pièces moulées, mais cela nécessite un réglage fin des opérations réalisées en parallèle.

On aboutit à la position représentée à la figure 4c soit avant le début de l'injection de matière à mouler, soit avant que le pic de pression à l'intérieur du moule ne soit atteint. Ce pic de pression est normalement atteint lorsque le volume de matière injecté équivaut à celui du volume d'empreinte et que l'on commence à injecter de la matière supplémentaire afin de réaliser un bourrage du volume d'empreinte.

Ainsi, la figure 4c représente un moule fermé avec des dispositifs de verrouillage 6 en position verrouillée. Une fois que le volume de matière à injecter est atteint, l'injection est interrompue.

Puis commence le refroidissement de la pièce moulée. Dès qu'est atteinte la température de démoulage, les verrous s'ouvrent. On passe par une position identique à celle de la figure 4b. Puis, le moule s'ouvre, puis la pièce est éjectée. On se retrouve alors en position ouverte illustrée à la figure 4a. Le cycle de moulage peut alors recommencer. Ainsi, l'invention vise également un procédé de moulage qui comprend une étape de verrouillage d'un dispositif de verrouillage décrit ci avant.

Les revendications qui suivent définissent les caractéristiques essentielles de l'invention. Elles couvrent différents modes de mise en oeuvre qui n'ont pas été décrits mais auxquels l'homme du métier pourrait aboutir sans difficulté particulières.

## Revendications

1. Moule (1) pour moulage, notamment par injection, comprenant deux demi-moules (2, 3) chacun d'entre eux étant défini par une surface latérale (21, 31), une face avant (22, 32) et une face arrière (23, 33), au moins l'un des deux demi-moules étant destiné à être associé à des moyens pour effectuer l'ouverture et la fermeture du moule, les deux demi-moules (2, 3) étant susceptibles d'entrer en contact au niveau d'un plan de joint (11) lorsque le moule (1) est en position fermée, dans lequel
- un demi-moule (3) est équipé d'au moins un dispositif (6) de verrouillage comprenant :
○ au moins un verrou (7) apte à être logé simultanément dans un évidement (25, 35) placé sur la face latérale de chaque demi-moule (2, 3),
○ au moins un système autonome (8) apte à rapprocher et écarter le verrou (7) des évidements (25, 35) dans lesquels le verrou (7) doit être logé ;
- le système autonome comprend un vérin (8) qui comprend une chambre (82) attelée à un demi-moule (2, 3), un piston apte à se déplacer dans ladite chambre (82) et une tige (83) solidaire du piston et à laquelle est fixé le verrou (7) ;
- la tige (83) et le verrou (7) sont aptes à se déplacer en translation selon une même direction (61) de verrouillage et d'ouverture, cette tige étant en position sortie de la chambre (82) du vérin (8) lorsque le dispositif de verrouillage (6) est verrouillé, et en position rentrée dans la chambre (82) du vérin (8) lorsque le dispositif de verrouillage (6) est ouvert ;
- la chambre (82) est fixée à un support (81) attelé à un seul des demi-moules (2, 3) ;
- le support (81) est attelé à une surface latérale (31) d'un demi-moule (3) ;
- le verrou (7) comprend deux tenons 72,73 destinés à se loger chacun dans un évidement (25,35) de chaque demi-moule (2, 3) ;
- chaque évidement (25, 35) présente une ouverture (27, 37), un fond (28, 38), et deux faces latérales opposées entre l'ouverture (27, 37) et le fond (28, 38) de l'évidement (25, 35),
**caractérisé en ce que**
chaque évidement (25,35) présente deux faces d'extrémité sensiblement orthogonales au plan de joint (11), la face latérale (26, 36) de chaque évidement (25,35) la plus proche du plan de joint formant un angle (A), compris entre 2 et 20° inclus avec le plan de joint (11), de sorte que la distance entre les faces latérales opposées augmente du fond (28,38) vers l'ouverture (27,37) de l'évidement (25,35),
les faces inclinées (26,36) des évidements (25,35) ainsi que celles des faces internes (74,75) des tenons (72,73) comprennent des plaquettes d'appui en un matériau dont les propriétés de glissement sont meilleures que celles du matériau des demi-moules (2,3) ou du verrou (7).

2. Moule selon la revendication 1, **caractérisé en ce que** le verrou (7) a une forme complémentaire de celle des évidements (25, 35) dans lesquels il doit être logé.

3. Moule selon la revendication 1 ou 2, **caractérisé en ce qu'**un premier demi-moule (2) est destiné à être associé à un plateau fixe (4), un second demi-moule (3) est destiné à être associé à une plateau mobile (5), l'un et/ou l'autre des plateaux et/ou des demi-moules étant équipés de moyens d'injection de matière à mouler et de moyens pour éjecter une pièce moulée.

4. Moule selon l'une quelconque des revendications précédentes, **caractérisé en ce que** chaque évidement (25) d'un demi-moule (2) est positionné symétriquement d'un évidement (35) de l'autre demi-moule (3) par rapport au plan de joint (11).

## Claims

1. A mold (1) for molding, particularly by injection, comprising two half-molds (2, 3) each of them being defined by a side surface (21, 31), a front face (22, 32) and a rear face (23, 33), at least one of the two half-molds being intended to be associated with means for carrying out the opening and the closure of the mold, the two half-molds (2, 3) being capable of coming into contact at a parting line (11) when the mold (1) is in the closed position, wherein:
- a half-mold (3) is fitted with at least one locking device (6) comprising:
- at least one latch (7) capable of being housed simultaneously in a recess (25, 35) placed on the side surface of each half-mold (2, 3),
- at least one standalone system (8) capable of bringing the latch (7) toward and away from the recesses (25, 35) in which the latch (7) is to be housed;
- the standalone system (8) comprising one cylinder (8) which comprises a chamber (82) coupled to a half-mold (2, 3), a piston capable of moving in said chamber (82) and a rod (83) secured to the piston and to which the latch (7) is attached;
- the rod (83) and the latch (7) being capable of moving in translation along a same direction (61) for locking and for opening, this rod being positioned out of the chamber (82) of the cylinder (8) when the locking device (6) is locked, and positioned in the chamber (82) of the cylinder (8) when the locking device (6) is open;
- the chamber (82) is attached to a support (81) coupled to one sole of the half-molds (2,3);
- the support (81) is coupled to a side surface (31) of a half-mold (3);
- the latch (7) comprises two tenons (72, 73) each intended to be housed in a recess (25, 35) of each half-mold (2, 3);
- each recess (25, 35) has an opening (27, 37), a bottom (28, 38), and two opposite side faces between the opening (27, 37) and the bottom (28, 38) of the recess (25, 35),
**characterized in that**
each recess (25, 35) has two end faces substantially orthogonal to the parting line (11), the side face (26, 36) of each recess (25, 35) closest to the parting line forming an angle (A), between 2° and 20° included, with the parting line (11), so that the distance between the opposite side faces increases from the bottom (28, 38) to the opening (27, 37) of the recess (25, 35),
the inclined faces (26, 36) of the recesses (25, 35) as well as that of the inner faces (74, 75) of the tenons (72, 73) comprise bearing plates made of a material the sliding properties of which are better than those of the material of the half-molds (2, 3) or of the latch (7).

2. The mold as claimed in claim 1, **characterized in that** the latch (7) has a shape to match that of the recesses (25, 35) in which it is to be housed.

3. The mold as claimed in claim 1 or 2, **characterized in that** a first half-mold (2) is intended to be associated with a fixed platen (4), a second half-mold (3) is intended to be associated with a movable platen (5), one and/or the other of the platens and/or of the half-molds being fitted with means for injecting material to be molded and means for ejecting a molded part.

4. The mold as claimed in any one of the preceding claims, **characterized in that** each recess (25) of a half-mold (2) is positioned in symmetry with a recess (35) of the other half-mold (3) relative to the parting line (11).

## Patentansprüche

1. Gussform (1) zum Formen, insbesondere durch Spritzgießen, die zwei Halbformen (2, 3) umfasst, von denen jede durch eine Seitenfläche (21, 31), eine Vorderseite (22, 32) und eine Rückseite (23, 33) definiert ist, wobei mindestens eine der beiden Halbformen dafür bestimmt ist, Mitteln zugehörig zu sein, um das Öffnen und Schließen der Gussform zu bewirken, wobei die beiden Halbformen (2, 3) dazu geeignet sind, sich im Bereich einer Verbindungsebene (11) zu berühren, wenn sich die Gussform (1) in der geschlossenen Position befindet, wobei:
- eine Halbform (3) mit mindestens einer Verschlussvorrichtung (6) ausgestattet ist, umfassend:
- mindestens einen Verschluss (7), der gleichzeitig in einer Aussparung (25, 35), die an der Seitenfläche jeder Halbform (2, 3) angeordnet ist, aufgenommen werden kann,
- mindestens ein selbständiges System (8), das den Verschluss (7) an die Aussparungen (25, 35), in denen der Verschluss (7) aufgenommen werden soll, heranbringen und von ihnen wegbewegen kann,
- das selbständige System einen Zylinder (8) umfasst, der eine Kammer (82) umfasst, die mit einer Halbform (2, 3) gekoppelt ist, einen Kolben, der sich in der Kammer (82) bewegen kann, und eine Stange (83), die eine Einheit mit dem Kolben bildet und an der der Verschluss (7) befestigt ist,
- die Stange (83) und der Verschluss (7) sich linear in dieselbe Verschluss- und Öffnungsrichtung (61) bewegen können, wobei sich diese Stange in einer Position befindet, in der sie aus der Kammer (82) des Zylinders (8) ragt, wenn die Verschlussvorrichtung (6) verschlossen ist, und in einer Position, in der sie wieder in die Kammer (82) des Zylinders (8) eingezogen ist, wenn die Verschlussvorrichtung (6) offen ist,
- die Kammer (82) an einem Halter (81) befestigt ist, der mit einer einzigen der Halbformen (2, 3) gekoppelt ist,
- der Halter (81) mit einer Seitenfläche (31) einer Halbform (3) gekoppelt ist,
- der Verschluss (7) zwei Zapfen (72, 73) umfasst, die dafür bestimmt sind, jeweils in einer Aussparung (25, 35) von jeder Halbform (2, 3) aufgenommen zu werden,
- jede Aussparung (25, 35) eine Öffnung (27, 37), einen Boden (28, 38) und zwei entgegengesetzte Seitenflächen zwischen der Öffnung (27, 37) und dem Boden (28, 38) der Aussparung (25, 35) aufweist,
**dadurch gekennzeichnet, dass**
jede Aussparung (25, 35) zwei Endflächen im Wesentlichen senkrecht zur Verbindungsebene (11) aufweist, wobei die Seitenfläche (26, 36) jeder Aussparung (25, 35), die der Verbindungsebene am nächsten liegt, einen Winkel (A) zwischen 2 und einschließlich 20° mit der Verbindungsebene (11) bildet, sodass der Abstand zwischen den entgegengesetzten Seitenflächen vom Boden (28, 38) in Richtung der Öffnung (27, 37) der Aussparung (25, 35) größer wird,
die geneigten Flächen (26, 36) der Aussparungen (25, 35) sowie die der Innenflächen (74, 75) der Zapfen (72, 73) Auflageplatten aus einem Material umfassen, dessen Gleiteigenschaften besser sind als die des Materials der Halbformen (2, 3) oder des Verschlusses (7).

2. Gussform nach Anspruch 1, **dadurch gekennzeichnet, dass** der Verschluss (7) eine zu den Aussparungen (25, 35), in denen er aufgenommen werden soll, komplementäre Form aufweist.

3. Gussform nach Anspruch 1 oder 2, **dadurch gekennzeichnet, dass** eine erste Halbform (2) dafür bestimmt ist, einer festen Platte (4) zugehörig zu sein, eine zweite Halbform (3) dafür bestimmt ist, einer beweglichen Platte (5) zugehörig zu sein, wobei die eine und/oder die andere der Platten und/oder der Halbformen mit Mitteln zum Einspritzen von Formmasse und mit Mitteln zum Auswerfen eines Formteils versehen ist bzw. sind.

4. Gussform nach einem der vorhergehenden Ansprüche, **dadurch gekennzeichnet, dass** jede Aussparung (25) einer Halbform (2) symmetrisch zu einer Aussparung (35) der anderen Halbform (3) bezogen auf die Verbindungsebene (11) platziert ist.
